Europäisches Patentamt

European Patent Office

Office européen des brevets

(11) Publication number: **0 280 760**
**A2**

(12) **EUROPEAN PATENT APPLICATION**

(21) Application number: 87107685.7

(22) Date of filing: 26.05.87

(51) Int. Cl.⁴: **B03C 1/28** , C10G 33/02 ,
//C02F1/48

The title of the invention has been amended (Guidelines for Examination in the EPO, A-III, 7.3).

(30) Priority: 04.02.87 HU 38687

(43) Date of publication of application:
07.09.88 Bulletin 88/36

(84) Designated Contracting States:
AT BE CH DE ES FR GB GR IT LI LU NL SE

(71) Applicant: **Altalános Szolgáltato és Epitöipari Kisszövetkezet**
**Jász u. 81/b**
**1135 Budapest(HU)**

(72) Inventor: **Lám, Béla**
**József Attila u. 15**
**HG-1161 Budapest(HU)**
Inventor: **Kálmán, László**
**Visegrádi u. 19**
**HG-1132 Budapest(HU)**
Inventor: **Nagy, Gabor**
**Vécsey u. 49**
**HG-1046 Budapest(HU)**
Inventor: **Sándor, Marsó**
**Goldmark u. 24**
**HG-1122 Budapest(HU)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Apparatus for treating materials, in particular fuels, with a magnetic field.**

(57) The invention relates to an apparatus for the removal of ferromagnetic materials from liquids, organic or inorganic compounds and mixtures thereof, and particularly fuels, for treating with a magnetic field and reduction of surfacial stresses.

The apparatus according to the invention contains at least two coaxial bored magnets (2) arranged in the direction of flow of the liquid and separated by at least one disc (3), as well as a housing (1) made of a non-magnetizable material closed at both ends with end-closing means (5) provided with a bore (10) for letting the liquid to be treated through.

Fig.1

# APPARATUS FOR THE REMOVAL OF FERROMAGNETIC MATERIALS FROM LIQUIDS, ORGANIC OR INORGANIC COMPOUNDS AND MIXTURES THEREOF - IN PARTICULAR FUELS -, FOR TREATING WITH MAGNETIC FIELD AND REDUCTION OF SURFACIAL STRESSES

The invention relates to an apparatus for the ferromagnetic treatment of liquids, organic or inorganic compounds and mixtures thereof and for reducing surfacial stresses

As it is well known, under the influence of treating with a strong magnetic field surfacial stress of liquids can be considerably decreased. As a consequence of reduced surfacial stress dissolution and mixing of different additives admixed to the liquid, as well as atomizeability increase to a large extent. Increased atomizeability is considered as most advantageous in respect to fuels.

Treating with a magnetic field is most important, however, not only in the field of fuels, but as it could be observed that when water was treated with a magnetic field - due to an effect mechanism not having been cleared up to now - scale deposition damaging considerably the equipments and fittings could not be found on the wall of fittings and pipelines being in contact with water.

Several solutions have been developed for the prevention of scale deposition. The Patient Specification HU-PS 91 278 discloses a solution, in sense of which electric current is allowed to pass through the liquid recipient to achieve the desired effect.

A similar solution is disclosed in the Patent AT-PS 191 810, according to which the desired effect is obtained by using a special system.

It has been tried to apply a three-phase rotating magnetic field, as it becomes evident from the Patent HU-PS 162 455.

The Patent SU-PS 315 690 describes also the application of an electromagnetic field for the same purpose.

Common drawback of known processes and apparatuses lies in that field of application is rather restricted, in the majority of cases it is delimited to the treatment of water. A further disadvantageous characteristic lies in that their formal resistance is high, harmful turbulent flow may occur in the apparatus, accordingly they can be used only for predetermined certain flow directions.

As it is well known, fuels contain a considerable quantity of ferromagnetic material even after leaving the finefilter.

In consideration that the nozzles and atomizing devices of the pumps of oil-heated equipment are most sensitive and costs of regeneration of the feeders and atomizers of internal combustion motors are extremely high, apparatuses are needed, by the aid of which harmful properties of ferromagnetic materials can be reduced resp. eliminated.

The present invention is aimed at the development of an apparatus which enables the treatment of any liquid, in particular fuels by means of a magnetic field and in such a manner that it removes ferromagnetic material from the liquid, simultaneously reducing considerably surfacial stresses. A further requirement lies in that by the expedient conversion of single structural elements the apparatus should be suitable for treating any other liquid, e.g. water.

The aim of the invention is realized with an apparatus, having a plurality - but at least two - coaxial bored magnets arranged in the flow direction of the liquid and separated by one or more discs and a housing made of a non-magnetizable material, enclosing the magnets and closed at both ends with closing means provided with a bore for letting the liquid to be treated through.

A preferred embodiment of the apparatus according to the invention is provided with a magnet with a central bore and a liquid channel.

Another preferred embodiment of the apparatus acording to the invention is assembled from a magnet with a permanent magnet core and a soft-iron armature.

A preferred embodiment of the apparatus according to the invention, being particularly suitable for water treatment, is provided with suitable guide elements perforated along one of its diameter, between the discs separating the magnets and formed as sealing elements.

All the embodiments of the apparatus according to the invention have disc(s) and end-closing means made of a non-magnetizable material.

With all the embodiments of the apparatus according to the invention there is a releasable - expediently threaded -connection between the end-closing means and the house.

The discs of a preferred embodiment of the apparatus according to the invention, being particularly suitable for treating fuel, are machined to a predetermined depth of the width of the soft-iron armature - expediently to the half thereof.

With a further preferred embodiment the diameter of the central bore of the magnet equals one 1/3 of the diameter of the inflow fitting of the liquid to be treated.

With another preferred embodiment of the apparatus according to the invention proportion of the width of the liquid channel and the central bore diameter is 1:2.

With a further preferred embodiment of the apparatus according to the invention the proportion of the thickness of the disc and the diameter of the central bore of the magnet amounts to 1 : 20.

With an expedient embodiment of the apparatus according to the invention the length of the magnet is equal to fivefold of the diameter of the central bore.

The apparatus according to the invention will be described in detail by means of a preferred embodiment serving as an example, by the aid of the drawing enclosed, wherein:

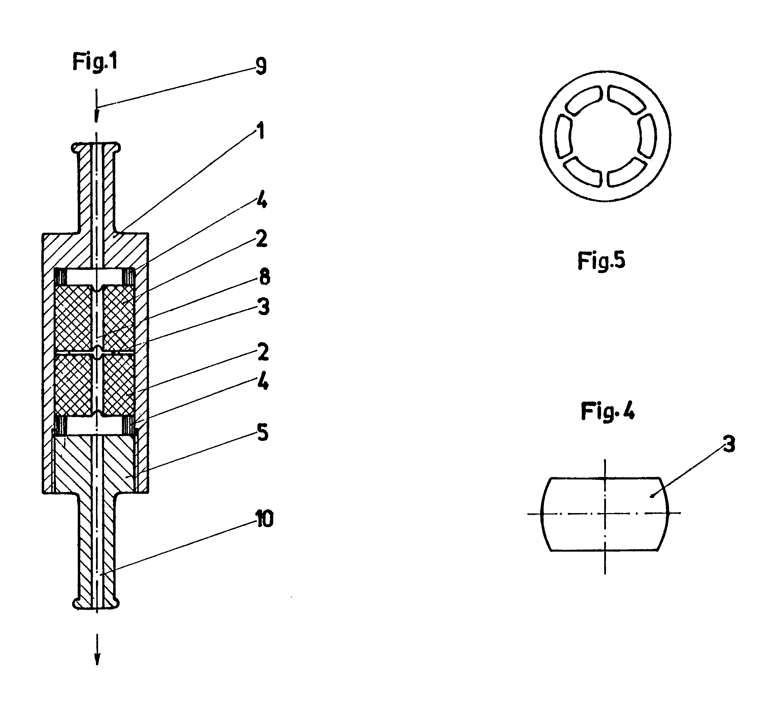

Figure 1 is the sectional view of the apparatus according to the invention,

Figure 2 the magnet of the apparatus according to Figure 1,

Figure 3 is the side-view of the magnet according to Figure 2,

Figure 4 illustrates the disc of the apparatus according to Figure 1 shaped in accordance with the invention,

Figure 5 the baffle element applied to another embodiment of the apparatus according to the invention.

The apparatus according to the invention consists of a plurality - but at least two - magnets 2 provided with a soft-iron armature, of the disc(s) 3 separating the magnets 2, as well as of the end-closing means 5, closing both ends of the apparatus and connected to the fittings of the liquid to be treated, in particular fuel, as well as of the housing 1 made of a non-magnetizable material and uniting all the structural elements into one unit.

Packing rings 4 are arranged between the end-closing means 5 and the magnets 2, between the end-closing means 5 and the housing 1 there is a threaded connection.

The apparatus operates, as follows:

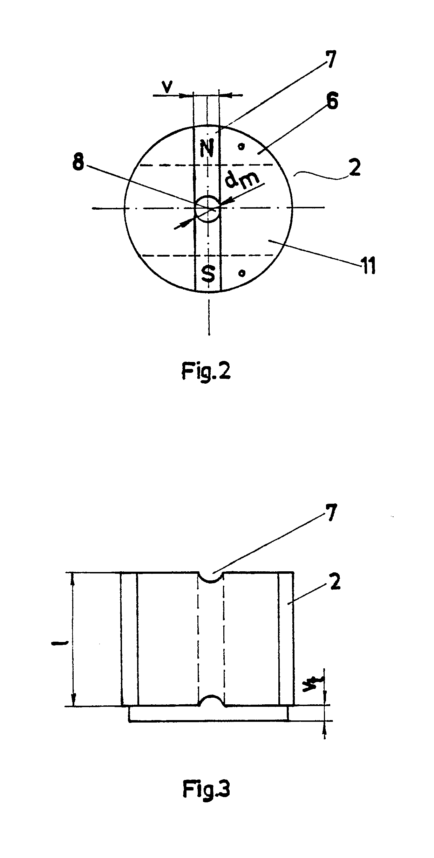

The liquid to be treated flows into the apparatus - as indicated by the arrow 9 (Fig. 2) -, wherein it first passes through the central bore 8 of the magnet 2 and impacts on the disc 3 having been arranged between the magnets 2; the disc 3 forces the liquid into the liquid channel 7 of the magnet 2, the liquid channel 7 guides the liquid to the soft-iron armature 6 which collects the magnetic lines of force and forms a monolithic unit with the magnet 2. Lateral edge of the disc 3 being in contact with the armature 6 is worked-off, in an optimal case up to the half of the soft-iron armature 6, in such a manner it can be assured that the liquid to be treated - the fuel - will always pass through the strongest magnetic field and intersects the possibly largest number of magnetic lines of force.

At the cut-off part of the disc 3 the liquid to be treated flows into the liquid channel 7 of the second magnet 2, therefrom it leaves the apparatus through the central bore 8 of the magnet 2 and the bore 10 of the end-closing means 5.

Figure 2 shows the formation of the magnet 2 of the apparatus according to the invention. As it becomes evident from the figure, the magnet 2 consists essentially of the core 11 made of a permanent magnet and the soft-iron armature 6 assembled therewith.

The magnet 2 is formed with a central bore 8 and a liquid channel 7 running perpendicularly to the axis of the central bore 8 and extending along the diameter of the magnet 2.

Expediently the diameter $d_m$ of the central bore 8 of the magnet 2 corresponds to one third of the diameter $d_f$ of the fitting delivering the liquid, while the width v of the liquid channels 7 corresponds to half of the diameter $d_m$ of the central bore.

Figure 3 is the side-view of the magnet 2 according to Figure 2, showing the shape of the liquid channels 7 and the relative position of the magnet 2 and the disc 3. Magnet 2 and disc 3 are coaxially arranged and the lateral edge of the disc 3 contacting the soft-iron armature 6 of the magnet 2 is worked-off - see Figure 4 - in an optimal case of the half of the soft-iron armature 6, while the length $\underline{h}$ of the magnet 2 corresponds to fivefold of the diameter $d_m$ of the central bore 8, while thickness $v_t$ of the disc 3 amounts to one twentieth of the diameter $d_m$ of the bore 8. For the sake of order, however, it should be mentioned that the thickness of the disc 3 is always determined by the intensity of the magnetic field.

The aforementioned apparatus is primarily suitable for treating fuels, as in course of the treatment surfacial stresses are considerably reduced, accordingly the fuel can be far better atomized and burnt. It goes without saying that the apparatus it suitable for treating other liquids too, for example for water treatment, as by its application precipitation and deposition of the materials contained in water can be prevented.

Considering the fact that water treatment will be successful even with a magnetic field with less intensity, structural elements of the apparatus can be slightly transformed, in so far as longitudinal dimensions $\underline{h}$ of the magnets and thicknesses $v_t$ of the discs approach each other, further-on, for guiding the flow of the liquid to be treated - the water - baffle elements having been perforated along one of its diameter are arranged between the discs. This baffle element is to be seen in Figure 5.

The advantage of the apparatus according to the invention lies in the simple design, it can be installed easily and wherever it is needed, in addition to prevention of the precipitation of harmful materials the apparatus considerably reduces surfacial stresses of the liquid, thus guaranteeing the most economical use and burning of fuels.

## Claims

1. Apparatus for the removal of ferromagnetic materials from liquids, organic or inorganic compounds and mixtures, thereof, in particular fuels, for treating with a magnetic field and reduction of surfacial stresses, characterized in that said apparatus includes at least two-coaxial bored magnets (2) arranged in the direction of flow of the liquid and separated by at least one disc (3); a housing (1) made of a non-magnetizable materal closed at both ends with end-closing means (5) provided with a bore (10) for letting the liquid to be treated through.

2. Apparatus as claimed in claim 1, characterized in that the magnet (2) contained has a central bore (8) and at least one liquid channel (7).

3. Apparatus as claimed in claim 1, characterized in that between the discs (3) separating the magnets (2) and formed as sealing elements at least one baffle element is arranged, which is perforated along one diameter.

4. Apparatus as claimed in claim 1 or 2, characterized in that the magnet (2) consists of a permanent magnet core (11) and of the pressed soft-iron armature (6) assembled with the core (11).

5. Apparatus as claimed in any of the claims 1 to 4, characterized in that the disc (3) is made of a non-magnetizable material.

6. Apparatus as claiemd in any of the claims 1, 2 and 4 to 5, characterized in that the disc (3) is worked-off to a predetermined depth to half of the width of the soft-iron armature (6).

7. Apparatus as claimed in any of the claims 1 to 6, characterized in that the end-closing means (5) is made of a non-magnetizable material.

8. Apparatus as claimed in any of the claims 1 to 7, characterized in that between the end-closing means (5) and the housing (1) there is a releasable threaded connection.

9. Apparatus as claimed in any of the claims 1, 2, 4 to 8, characterized in that the diameter ($d_m$) of the cen-tral bore (8) of the magnet (2) corresponds to one third of the diameter ($d_f$) of the fitting introducing the fuel, that means that

$$d_m = \frac{d_f}{3}$$

10. Apparatus as claimed in any of the claims 1, 2 and 4 to 9, characterized in that proportion of the width (v) of the liquid channel (7) and the diameter ($d_m$) of the central bore (8) is 1 : 2, that is

$$V = \frac{d_m}{2}$$

11. Apparatus as claimed in any of the claims 1, 2 and 4 to 10, characterized in that a proportion between thickness ($v_t$) of the disc (3) and diameter ($d_m$) of the central bore (8) is 1 : 20, that is

$$v_t = \frac{d_m}{20}$$

12. Apparatus as claimed in any of the claims 1, 2 and 4 to 11, characterized in that length (h) of the magnet (2) is equal to fivefold of the diameter ($d_m$) of the central bore (8), that is

$$h = 5\ d_m.$$

**Fig.1**

9

1

4

2

8

3

2

4

5

10

**Fig.5**

**Fig. 4**

3

0 280 760

Fig.2

Fig.3